# EUROPEAN PATENT APPLICATION

(11) **EP 3 184 294 A1**
(43) Date of publication of application: **28.06.2017**
(21) Application number: 14899939.4
(22) Date of filing: 05.11.2014
(51) Int. Cl.: B32B 3/12, B32B 27/04

(54) **FLAME-RETARDANT LIGHTWEIGHT STRUCTURAL CORE AND MANUFACTURING METHOD THEREFOR**

(30) Priority: 19.08.2014 CN 201410407607
(71) Applicant: Zhuzhou Times New Material Technology Co., Ltd., Zhuzhou, Hunan 412007 (CN)
(72) Inventor: YANG, Jin, Zhuzhou Hunan 412007 (CN); LI, Guofeng, Zhuzhou Hunan 412007 (CN); WU, Hongwei, Zhuzhou Hunan 412007 (CN); JIANG, Qibin, Zhuzhou Hunan 412007 (CN)
(74) Representative: HGF Limited
(86) International application number: PCT/CN2014/090334
(87) International publication number: WO 2016/026217

(57) **Abstract**

A structural core material comprises a honeycomb core material and fiber-reinforced thermosetting resin foam filled in holes of the honeycomb core material, the fiber-reinforced thermosetting resin foam being prepared by foaming of a mixture of thermosetting resin and fiber. The thermosetting resin has good flame retardancy, so that the structural core material has flame-retardant property, and the composite structure of the honeycomb core material, the thermosetting resin and the fiber enables the structural core material to have light weight and good mechanical properties. The experimental results show that the structural core material has the compression strength of above 1.8 MPa, the density of 110 to 300 kg/m³, the acoustical reduction factor of above 24 dB and the fire rating of S4 grade.

## Description

This application claims the priority of Chinese Patent Application No. 201410407607.1, filed on August 19, 2014 with the Chinese Patent Office and entitled "FLAME-RETARDANT LIGHTWEIGHT STRUCTURAL CORE AND MANUFACTURING METHOD THEREFOR", the entire disclosure of which is incorporated herein by reference.

### TECHINICAL FIELD

This invention relates to the field of material technology, and in particular to a structural core material and a method for preparing the same.

### BACKGROUND OF THE INVENTION

Rail transit is developing rapidly towards the direction of high speed, safety and comfort, and the new generations of trains are imposing higher and higher requirements on interior parts. Lightweight interiors are becoming an important development trend for transportation tools, including locomotives, aircrafts, ships and automobiles. Rail transit is in an urgent need of a composite product that can not only meet the requirements of interior parts on fire protection and mechanical properties or the like, but also reduce weight greatly.

Presently, the main materials for interior parts, such as roof, side panel, flooring, air duct or the like, include glass fiber reinforced plastics, bamboo plywoods, aluminum honeycomb panels and the like. The densities of glass fiber reinforced plastics and bamboo plywoods are generally above 1000 kg/m³, and their weights are too large. Aluminum honeycomb panel is hard to meet the requirements of high-speed rail transit due to the problems in its own mechanical and comprehensive performance. While the traditional foam structure has limited use due to the existence of brittleness, fragility, low strength and other shortcomings.

### SUMMARY OF THE INVENTION

In view of this, the technical problem to be solved by this invention is to provide a structural core material and a method for preparing the same. The structural core material provided by this invention is not only light in weight but also fireproof and good in mechanical property.

This invention provides a structural core material comprising:
a honeycomb core material; and
a fiber-reinforced thermosetting resin foam filled in the cells of the honeycomb core material; wherein the fiber-reinforced thermosetting resin foam is produced by foaming a mixture comprising a thermosetting resin and the fiber.

Preferably, the mixture further comprises a foaming agent.

Preferably, the mixture further comprises one or more of a curing agent, a curing accelerator, a flame retardant, a stabilizing agent and a release agent.

Preferably, the material of the honeycomb core material is one selected from the group consisting of a metallic material and an organic material.

The thermosetting resin is one or more selected from the group consisting of phenolic resin, epoxy resin, unsaturated resin, melamine resin and polyurethane resin.

The fiber is one or more selected from the group consisting of Kevlar fiber, polyester fiber, carbon fiber and glass fiber.

Preferably, the weight ratio between the fiber and the thermosetting resin is 10:90 to 80:20.

This invention provides a method for preparing a structural core material comprising the steps of:
mixing and extruding a thermosetting resin and a fiber to obtain a mixture; and
spreading and covering the mixture over the cells of a honeycomb core material, followed by hot pressing and foaming to obtain the structural core material.

Preferably, the weight ratio between the fiber and the thermosetting resin is 10:90 to 80:20.

Preferably, the length of the fiber is 4 mm to 20 mm.

Preferably, the extrusion is carried out by using a twin screw extruder.

Preferably, the hot pressing is carried out at a temperature in the range of 120 to 170 °C and a pressure in the range of 0.4 to 1 MPa for a period of time in the range of 10 to 40 min.

Compared with the prior art, this invention provides a structural core material, comprising: a honeycomb core material; a fiber-reinforced thermosetting resin foam filled in the cells of the honeycomb core material; wherein the fiber-reinforced thermosetting resin foam is produced by foaming a mixture comprising a thermosetting resin and the fiber. The structural core material provided by this invention is prepared from a honeycomb core material, a thermosetting resin and a fiber. The thermosetting resin has excellent flame retardancy, so that the structural core material has flame retardant property, and the composite structure made up of the three of the honeycomb core material, the thermosetting resin and the fiber makes the structural core material not only light in weight but also good in mechanical property. Experimental results show that the structural core material prepared according to this invention has compression strength above 1.8 MPa, a density in the range of 110 to 300 kg/m³, a sound insulation above 24 dB, and a preventive fire protection rating of S4.

### DETAILED DESCRIPTION OF EMBODIMENTS

This invention provides a structural core material comprising:
a honeycomb core material; and
a fiber-reinforced thermosetting resin foam filled in the cells of the honeycomb core material; wherein the fiber-reinforced thermosetting resin foam is produced by foaming a mixture comprising a thermosetting resin and the fiber.

The material of the honeycomb core material according to this invention is one selected from the group consisting of a metallic material and an organic material, more preferably one selected from the group consisting of aluminum honeycomb and aramid honeycomb. Hexagonal honeycomb is generally selected, and other shapes can also be chosen as needed. The cell diameter of the honeycomb is preferably in the range of 3 to 30 mm, and more preferably 6 to 25 mm; and the wall thickness of the honeycomb is preferably in the range of 0.05 to 1 mm, and more preferably 0.1 to 0.5 mm.

The structural core material according to this invention comprises a fiber-reinforced thermosetting resin foam filled in the cells of the honeycomb core material, wherein the fiber-reinforced thermosetting resin foam is produced by foaming a mixture comprising a thermosetting resin and the fiber. The mixture according to this invention preferably comprises a thermosetting resin and a foaming agent. The thermosetting resin is preferably one or more selected from the group consisting of phenolic resin, epoxy resin, unsaturated resin, melamine resin and polyurethane resin; a flame retardant modified resin can also be chosen; further, a low viscosity resin can also be chosen, for example, a resin with a viscosity of 300 mPs or less. The foaming agent according to this invention can be a physical or chemical foaming agent; it is not restricted in this invention, and preferably it is an Ac foaming agent or an OBSH foaming agent. The foaming ratio of the foaming agent is preferably 1 to 10 times, and more preferably 2 to 6 times; the foaming temperature is preferably in the range of 60 to 200 °C, and more preferably 70 to 160 °C. In the thermosetting resin composition, the weight ratio between the foaming agent and the thermosetting resin is preferably in the range of 1:99 to 40:60, more preferably 5:95 to 30:70, and most preferably 10:90 to 25:75.

The mixture described in the present invention preferably further comprises one or more of a curing agent, a curing accelerator, a flame retardant, a stabilizing agent and a release agent. The type and the addition amount of the above additives are not restricted in this invention, as long as they are the type and addition amount well known to those skilled in the art.

The fiber described in the present invention is one or more selected from the group consisting of Kevlar fiber, polyester fiber, carbon fiber and glass fiber. The type of the fiber may preferably be short fiber, fiber whisker or a mixture thereof. The length of the fiber is preferably in the range of 0.1 to 20 mm, more preferably 4 to 20 mm, and most preferably 6 to 10 mm. The diameter of the fiber is preferably in the range of 0.001 to 1 mm, and more preferably 0.005 to 0.1 mm. Preferably, the weight ratio between the fiber and the thermosetting resin is 10:90 to 80:20, more preferably 20:80 to 60:40, and most preferably 25:75 to 45:55.

This invention provides a method for preparing a structural core material, which comprises the steps of:
mixing and extruding a thermosetting resin and a fiber to obtain a mixture; and
spreading and covering the mixture over the cells of a honeycomb core material, followed by hot pressing and foaming to obtain the structural core material.

In this invention, the thermosetting resin and the fiber are mixed and extruded to obtain the mixture. The manner for mixing the thermosetting resin and the fiber is not restricted in this invention, and mixing in a mixer is preferred. The extrusion described in this invention is preferably carried out by using a twin screw extruder. The mixture is preferably dried after being extruded, and the drying is preferably performed at a temperature in the range of 100 to 110°C.

The mixture described in this invention preferably comprises a thermosetting resin and a foaming agent. The thermosetting resin is preferably one or more selected from the group consisting of phenolic resin, epoxy resin, unsaturated resin, melamine resin and polyurethane resin; and a flame retardant modified resin or a low viscosity resin can also be chosen, for example, a resin with viscosity of 300 mPs or less. The foaming agent described in this invention can be a physical or chemical foaming agent; it is not restricted in this invention, and preferably it is an Ac foaming agent or an OBSH foaming agent. The foaming ratio of the foaming agent is preferably 1 to 10 times, and more preferably 2 to 6 times; the foaming is preferably performed at a temperature in the range of 60 to 200 °C, and more preferably 70 to 160 °C. In the mixture, the weight ratio between the foaming agent and the thermosetting resin is preferably in the range of 1:99 to 40:60, more preferably 5:95 to 30:70, and most preferably 10:90 to 25:75.

The mixture described in the present invention preferably further comprises one or more of a curing agent, a curing accelerator, a flame retardant, a stabilizing agent and a release agent. The type and the addition amount of the above additives are not restricted in this invention, as long as they are be the type and addition amount well known to those skilled in the art.

The fiber described in the present invention is one or more selected from the group consisting of Kevlar fiber, polyester fiber, carbon fiber and glass fiber. The type of the fiber may preferably be short fiber, fiber whisker or a mixture thereof. The length of the fiber is preferably in the range of 0.1 to 20 mm, more preferably 4 to 20 mm, and most preferably 6 to 10 mm. The diameter of the fiber is preferably in the range of 0.001 to 1 mm, and more preferably 0.005 to 0.1 mm. Preferably, the weight ratio between the fiber and the thermosetting resin is 10:90 to 80:20, more preferably 20:80 to 60:40, and most preferably 25:75 to 45:55.

After the mixture is obtained, the mixture is spread and covered over the cells of a honeycomb core material, and then hot pressed and foamed to obtain the structural core material.

The mixture is spread and covered over the honeycomb cells, in particular spread and covered over the surface of the honeycomb so that it is spread and covered on the surface with an even thickness; it is also possible to spread and cover the mixture on a hot platen, and then lay the honeycomb on the mixture. After the completion of the spreading and covering, hot pressing and foaming are carried out. Preferably, the hot pressing is carried out at a temperature in the range of 120 to 170 °C and a pressure in the range of 0.4 to 1 MPa for a period of time in the range of 10 to 40 min. In this invention, hot pressing and foaming are carried out at the same time, and no secondary compounding is required. The material of the honeycomb core material according to this invention is one selected from the group consisting of a metallic material and an organic material, more preferably one selected from the group consisting of aluminum honeycomb and aramid honeycomb. Hexagonal honeycomb is generally selected, and other shapes can also be chosen as needed. The cell diameter of the honeycomb is preferably in the range of 3 to 30 mm, and more preferably 6 to 25 mm; and the wall thickness of the honeycomb is preferably in the range of 0.05 to 1 mm, and more preferably 0.1 to 0.5 mm.

The structural core material provided by this invention is prepared from a honeycomb core material, a thermosetting resin and a fiber. The above raw materials all have excellent flame retardancy, so that the structural core material exhibits flame retardant property, and the composite structure made up of three of the honeycomb core material, the thermosetting resin and the fiber makes the structural core material not only light in weight but also good in mechanical property.

In this invention, it is preferable to perform performance measurements of the structural core material in the following manner:
Preventive fire protection: DIN5510-2;
Flatwise compression: GB/T1453;
Sound insulation: ISO 140-3;
Density: GB/T1643.

These four items are the standards for the test results mentioned herein.

In order to further illustrate the present invention, the structural core material and the preparation method thereof provided by the present invention will be described in detail with reference to the following examples.

### Example 1

75 parts of phenolic resin, 25 parts of AC foaming agent and 30 parts of short glass fiber with a length of 5 mm were mixed, then kneaded and extruded through a twin screw extruder, and heated at 105 °C for 5 min through a drying tunnel to obtain a mixture. A aluminum honeycomb core was selected, a hexagonal honeycomb core with a height of 13 mm, a cell diameter of 25 mm and a wall thickness of 0.3 mm was chosen, and the aluminum honeycomb core was stretched (the raw material for the aluminum honeycomb was a honeycomb block and needed to be stretched into a regular hexagon with an aluminum honeycomb stretcher) and placed on a release paper, then the dried material was spread and covered thereon, and another layer of release paper was placed uppermost. The release paper was used to prevent the material from adhering to the press platen, and it was possible to spray or wipe a release agent on the platen instead of the release paper. The release paper and the material therein were transferred into a hot press. The press was reduced to 13 mm, and hot-pressing was carried out at 170 °C and 0.5 MPa for 25 min to obtain a structural core material.

The structural core material prepared in Example 1 was tested by the methods mentioned in this invention. The structural core material obtained had compression strength of 1.8 MPa, a density of 160 kg/m³, a sound insulation of 24 dB and a preventive fire protection rating of S4.

### Example 2

80 parts of phenolic resin, 20 parts of AC foaming agent and 35 parts of short glass fiber with a length of 10 mm were mixed, then kneaded and extruded through a twin screw extruder, and heated at 105 °C for 6 min through a drying tunnel to obtain a mixture. A aluminum honeycomb core was selected, a hexagonal honeycomb core with a height of 25 mm, a cell diameter of 15 mm and a wall thickness of 0.2 mm was chosen, and the aluminum honeycomb core was stretched. A layer of fiberglass prepreg was prepared, then the stretched aluminum honeycomb core was placed on the prepreg, the dried material was then spread and covered thereon, and another layer of fiberglass prepreg was placed uppermost. A release agent was sprayed on the platen, and then the material was placed on the press platen. The press was reduced to 26 mm, and hot-pressing was carried out at 160 °C and 0.7 MPa for 30 min to obtain a structural core material.

The structural core material prepared in Example 2 was tested by the methods mentioned in this invention. The structural core material obtained had compression strength of 2 MPa, a density of 300 kg/m³, a sound insulation of 32 dB and a preventive fire protection rating of S4.

### Example 3

85 parts of phenolic resin, 13 parts of OBSH foaming agent, 2 parts of epoxy curing agent and 25 parts of short glass fiber with a length of 17 mm was mixed, then kneaded and extruded through a twin screw extruder, and heated at 100 °C for 2 min through a drying tunnel to obtain a mixture. An aramid honeycomb with a thickness of 1 mm, a height of 25 mm and a cell diameter of 15 mm was chosen and prepared. Finally, the mixture was spread and covered in a press and the aramid honeycomb core was placed thereon. 0.1 mm thickness of carbon fiber prepreg was placed on each of the upper and lower surface layers. A release agent was sprayed on the hot platen, and then the carbon fiber prepreg and the material therein were placed on the hot platen. The press was reduced to about 15 mm, and hot-pressing was carried out at 160 °C and 0.7 MPa for 10 min to obtain a structural core material.

The structural core material prepared in Example 3 was tested by the methods mentioned in this invention. The structural core material obtained had compression strength of 2.2 MPa, a density of 260 kg/m³, a sound insulation of 30 dB and a preventive fire protection rating of S4.

### Example 4

75 parts of phenolic resin, 25 parts of AC foaming agent and 40 parts of short glass fiber with a length of 20 mm was mixed, then kneaded and extruded through a twin screw extruder, and heated at 105 °C for 5 min through a drying tunnel to obtain a mixture. A aluminum honeycomb core was selected, a hexagonal honeycomb core with a height of 25 mm, a cell diameter of 15 mm and a wall thickness of 0.2 mm was chosen. Finally, the mixture was spread and covered in a press and the aluminum honeycomb core was placed thereon. The press was reduced to 13 mm, and hot-pressing was carried out at 170 °C for 25 min to obtain a structural core material.

The structural core material prepared in Example 4 was tested by the methods mentioned in this invention. The structural core material obtained had compression strength of 1.8 MPa, a density of 130 kg/m³, a sound insulation of 24 dB and a preventive fire protection rating of S4.

### Example 5

85 parts of phenolic resin, 13 parts of OBSH foaming agent, 2 parts of curing agent and 30 parts of short glass fiber with a length of 7 mm was mixed, then kneaded and extruded through a twin screw extruder, and heated at 105 °C for 5 min through a drying tunnel to obtain a mixture. An aramid honeycomb with a thickness of 0.7 mm, a height of 25 mm and a cell diameter of 15 mm was prepared. Finally, the mixture was spread and covered in a press and the aramid honeycomb core was placed thereon. The press was reduced to 15 mm, and hot-pressing was carried out at 160 °C for 10 min to obtain a structural core material.

The structural core material prepared in Example 5 was tested by the methods mentioned in this invention. The structural core material obtained had compression strength of 3.5 MPa, a density of 110 kg/m³, a sound insulation of 30 dB and a preventive fire protection rating of S4.

While the preferred embodiments of the present invention have been described hereinabove, it is to be noted that, various improvements and modifications thereof will be apparent to those skilled in the art without departing from the principle of the invention. All such improvements and modifications are intended to fall within the scope of the invention.

## Claims

1. A structural core material, comprising:
a honeycomb core material; and
a fiber-reinforced thermosetting resin foam filled in the cells of the honeycomb core material, wherein the fiber-reinforced thermosetting resin foam is produced by foaming a mixture comprising a thermosetting resin and the fiber.

2. The structural core material according to claim 1, **characterized in that** the mixture further comprises a foaming agent.

3. The structural core material according to claim 2, **characterized in that** the mixture further comprises one or more of a curing agent, a curing accelerator, a flame retardant, a stabilizing agent and a release agent.

4. The structural core material according to claim 1, **characterized in that** the material of the honeycomb core material is one selected from the group consisting of a metallic material and an organic material;
the thermosetting resin is one or more selected from the group consisting of phenolic resin, epoxy resin, unsaturated resin, melamine resin and polyurethane resin; and
the fiber is one or more selected from the group consisting of Kevlar fiber, polyester fiber, carbon fiber and glass fiber.

5. The structural core material according to claim 1, **characterized in that** the weight ratio between the fiber and the thermosetting resin is 10:90 to 80:20.

6. A method for preparing a structural core material, comprising the steps of:
mixing and extruding a thermosetting resin and a fiber to obtain a mixture; and
spreading and covering the mixture over the cells of a honeycomb core material, followed by hot pressing and foaming to obtain the structural core material.

7. The method for preparing a structural core material according to claim 6, **characterized in that** the weight ratio between the fiber and the thermosetting resin is 10:90 to 80:20.

8. The method for preparing a structural core material according to claim 6, **characterized in that** the fiber has a length in the range of 4 mm to 20 mm.

9. The method for preparing a structural core material according to claim 6, **characterized in that** the extrusion is carried out by using a twin screw extruder.

10. The method for preparing a structural core material according to claim 6, **characterized in that** the hot pressing is carried out at a temperature in the range of 120 to 170 °C and a pressure in the range of 0.4 to 1 MPa for a period of time in the range of 10 to 40 min.
